# EUROPÄISCHE PATENTSCHRIFT

(11) **EP 3 922 869 B1**
(45) Veröffentlichungstag und Bekanntmachung des Hinweises auf die Patenterteilung: **14.09.2022**
(21) Anmeldenummer: 21176304.0
(22) Anmeldetag: 27.05.2021
(51) Int. Cl.: F16B 9/00, A47K 3/28

(54) **ANSCHLUSSVORRICHTUNG ZUM BEFESTIGEN AN EINEM HOHLPROFIL SOWIE STABILISIERUNGSSET UND STABILISIERUNGSANORDNUNG**
CONNECTING DEVICE FOR FIXING TO A HOLLOW PROFILE AND STABILISING SET AND STABILISING ARRANGEMENT
DISPOSITIF DE LIAISON DESTINÉ À ÊTRE FIXÉ À UN PROFILÉ CREUX, AINSI QU'ENSEMBLE DE STABILISATION ET DISPOSITIF DE STABILISATION

(30) Priorität: 12.06.2020 DE 202020103389 U
(43) Veröffentlichungstag der Anmeldung: 15.12.2021
(73) Patentinhaber: Pauli + Sohn GmbH Metallwaren, 51597 Morsbach (DE)
(72) Erfinder: SCHNEIDER, Torben, 51597 Morsbach (DE)
(74) Vertreter: Neumann Müller Oberwalleney Patentanwälte PartG mbB

(56) Entgegenhaltungen:
- DE-U1-202016 102 470

## Beschreibung

Die vorliegende Erfindung betrifft eine Anschlussvorrichtung zum Befestigen an einem Hohlprofil, wobei die Anschlussvorrichtung einen Grundkörper mit einem Bodenabschnitt und einem Hülsenabschnitt, der sich entlang einer Längsachse erstreckt und an einem bodenfernen axialen Ende eine Einführöffnung für das Hohlprofil aufweist, und eine Klemmeinheit umfasst. Weiterhin betrifft die vorliegende Erfindung ein Stabilisierungsset mit einem Hohlprofil und einer Anschlussvorrichtung zum Befestigen an dem Hohlprofil. Des Weiteren betrifft die vorliegende Erfindung eine Stabilisierungsanordnung zum Abstützen eines Flächenelements, insbesondere einer Glaswand einer Dusche gegenüber einem ortsfesten Bauteil, insbesondere einer Gebäudewand mit einem Stabilisierungsset.

Derartige Anschlussvorrichtungen werden beispielsweise an hohlprofilförmigen Stabilisierungsstangen für feststehende Duschtrennwände, Trennwände im Sanitärbereich oder ähnliches angebracht. Aus der DE 20 2016 102 470 U1 ist ein Stabilisierungsset zur Abstützung einer Glaswand einer Dusche gegenüber einer Gebäudewand bekannt. Das Stabilisierungsset umfasst ein hohlzylindrisches Profil, dessen wandseitiges Ende in einer Hülse eingesteckt ist. Das Profil ist mittels Madenschrauben, die in die Hülsenwand eingeschraubt sind, gesichert.

Als nachteilig wird erachtet, dass mittels solcher Madenschrauben nur geringe Klemmkräfte auf das zu sichernde Hohlprofil aufgebracht werden können. Denn bei zu starkem Anziehen der Madenschrauben können die Gewinde in den zumeist aus optischen Gründen dünnwandig gestalteten Hülsen zerstört werden.

Weitere Anschlussvorrichtungen sind aus der CH 665 456 A5, DE 297 24 645 U1 und EP 2 914 525 B1 bekannt.

Es ist eine Aufgabe der vorliegenden Erfindung, eine Anschlussvorrichtung bereitzustellen, die eine stabilere und belastbarere Befestigung der Anschlussvorrichtung an dem zu befestigenden Hohlprofil gewährleistet. Die Aufgabe liegt weiter darin, ein Stabilisierungsset mit einer solchen Anschlussvorrichtung vorzuschlagen, das stabil und belastbar ist. Weiterhin ist es die Aufgabe der vorliegenden Erfindung, eine Stabilisierungsanordnung mit einem solchen Stabilisierungsset vorzuschlagen, das ein Flächenelement stabil und belastbar gegenüber einem ortsfesten Bauteil abstützt.

Die Aufgabe ist bei einer Anschlussvorrichtung der eingangs genannten Art dadurch gelöst, dass die Klemmeinheit ein Klemmelement und eine Stellschraube aufweist, wobei ein Stützabschnitt des Klemmelements am Bodenabschnitt des Grundkörpers abgestützt ist und ein Klemmabschnitt des Klemmelements im Hülsenabschnitt des Grundkörpers angeordnet ist, und wobei die Stellschraube einen Schraubenkopf und einen sich entlang einer Schraubenachse erstreckenden Schraubenschaft aufweist, wobei der Schraubenschaft mit dem Bodenabschnitt des Grundkörpers schraubverbunden und der Schraubenkopf an einer am Stützabschnitt des Klemmelements ausgebildeten Stützfläche abstützbar beziehungsweise abgestützt ist, sodass durch Eindrehen der Stellschraube in den Bodenabschnitt der Klemmabschnitt zu einer Klemmfläche verlagerbar ist.

Von Vorteil ist, dass das Klemmelement von einer der Einführöffnung gegenüberliegenden axialen Seite, mit anderen Worten vom Bodenabschnitt her seitlich in den Hülsenabschnitt hineinragt. Auf diese Weise ist der Klemmabschnitt im Grundkörper, respektive im Hülsenabschnitt angeordnet und kann, wenn das zu befestigende Hohlprofil in den Hülsenabschnitt eingesteckt ist (Steckstellung), in einem Hohlraum des Hohlprofils angeordnet sein. Dadurch kann der Klemmabschnitt in der Steckstellung von innen gegen einen Profilwandbereich des Hohlprofils drücken, sodass dieser zwischen dem Klemmabschnitt und der Klemmfläche einklemmbar ist. Durch Betätigen der Stellschraube, das heißt durch Links- oder Rechtsdrehung um deren Schraubenachse, kann die Lage des Klemmabschnitts im Hülsenabschnitt verändert werden. Beim Eindrehen, respektive Festziehen der Stellschraube drückt der Schraubenkopf gegen die Stützfläche des Stützabschnitts und drückt den Klemmabschnitt hin zur Klemmfläche.

Die Schraubenachse kann senkrecht zur Längsachse ausgerichtet sein. Dies vereinfacht den Aufbau der Klemmeinheit. Vorzugsweise sind die Schraubenachse und die Klemmfläche axial zur Längsachse versetzt zueinander angeordnet. Insbesondere kann die Schraubenachse parallel zu einer Hochachse der Anschlussvorrichtung ausgerichtet sein.

Des Weiteren kann der Bodenabschnitt einen unter Bildung eines Absatzes gestuft gestalteten Boden aufweisen, wobei in dem Absatz eine Gewindebohrung für den Schraubenschaft der Stellschraube ausgebildet sein kann. Dadurch kann die Gewindebohrung länger ausgebildet sein, sodass die Stellschraube größere Klemmkräfte auf das Klemmelement übertragen kann. Zweckmäßigerweise weist die Stellschraube ein zur Gewindebohrung korrespondierendes Außengewinde auf. Alternativ zur Ausgestaltung mit der Gewindebohrung kann die Stellschraube ein selbstschneidendes Gewinde aufweisen, sodass die Stellschraube ohne Gewindebohrung in den Absatz eingeschraubt sein kann. Die Stellschraube weist vorzugsweise einen fest angeformten Schraubenkopf auf. Grundsätzlich denkbar und möglich ist aber auch, dass die Stellschraube eine Gewindestange und eine aufgeschraubte Mutter aufweist. Der Absatz des Bodens kann eine der Einführöffnung zugewandte Absatzfläche aufweisen, die den Hülsenabschnitt axial begrenzt, und einen Endanschlag bilden kann. Das zu befestigende Hohlprofil kann nur in den Hülsenabschnitt eingesteckt werden.

Weiterhin kann vorgesehen sein, dass der Stützabschnitt in eine zwischen dem Absatz und einem den Absatz entlang der Längsachse überlappenden Wandbereich gebildete Vertiefung im Boden eingreift und mit der Stellschraube gegen eine dem Stützabschnitt zugewandte Gegenfläche des Absatzes verspannbar ist. Dies stellt eine besondere stabile Klemmeinheit bereit, mittels der das zu befestigende Hohlprofil in der Steckstellung sicher und stabil zwischen dem Klemmabschnitt und dem Hülsenabschnitt eingespannt werden kann.

Das Klemmelement kann um die Schraubenachse kippbar gelagert sein. Auf diese Weise kann der Klemmabschnitt des Klemmelements beim Eindrehen der Stellschraube, deren Schraubenkopf sich an dem Stützabschnitt des Klemmelements abstützt, um die Schraubenachse hin zur Klemmfläche mit einem bestimmten Radius kippen. Somit wirkt das Klemmelement wie ein Kipphebel.

Insbesondere kann vorgesehen sein, dass die Gegenfläche des Absatzes ein erstes Flächensegment, das parallel zur Längsachse ausgerichtet ist, und ein zweites Flächensegment, das schräg zur Längsachse ausgerichtet ist und mit der Längsachse einen sich zur Einführöffnung hin öffnenden Winkel einschließt, aufweisen. Vorzugsweise liegt der Winkel in einem Bereich von 2 Grad bis 20 Grad, wobei besonders gute Ergebnisse mit einem Winkel in einem Bereich von 4 Grad bis 10 Grad erzielt worden sind. Durch die schräge Ausrichtung der beiden Flächensegmente der Gegenfläche zueinander ist zwischen den beiden Flächensegmenten eine Kante gebildet. Die Kante kann in der Querrichtung der Anschlussvorrichtung verlaufen. Die Kante ist vorzugsweise bodenwärts von der Schraubachse angeordnet. Beim Eindrehen der Stellschraube wirkt der Stützabschnitt gegen die Kante des Absatzes und bewirkt ein Kippen des Klemmelements um die Kante mit einem bestimmten Radius. Dabei wird der Klemmabschnitt hin zur Klemmfläche verlagert. Die Kante kann auch als Kipplinie bezeichnet werden. Da beim Einstecken des Hohlprofils dieses gegen den Klemmabschnitt stößt und bis zum vollständigen Einschieben in den Hülsenabschnitt das Klemmelement, wenn zuvor die Stellschraube gelockert wurde, durch das Hohlprofil wieder zurückgestellt werden kann, benötigt die Anschlussvorrichtung keine Rückstelleinrichtung. Grundsätzlich ist eine kippbare Lagerung des Klemmelements auch möglich, wenn die gesamte Gegenfläche des Absatzes schräg zur Längsachse ausgerichtet ist.

Um das Kippen des Klemmelements um die Schraubenachse weiter zu begünstigen, kann eine parallel zur Schraubenachse verlaufende Erstreckung der Vertiefung größer als das 1,1-fache einer Dicke des Stützabschnitts und insbesondere kleiner als das 2,0-fache der Dicke des Stützabschnitts sein.

Statt einer kippbaren Lagerung des Klemmelements kann dieses auch rein axial zur Schraubenachse bewegbar sein, wodurch der Klemmabschnitt ebenfalls hin zur Klemmfläche verlagerbar ist. Insbesondere kann ein Abstand axial zur Schraubenachse zwischen der Gegenfläche des Absatzes und der Klemmfläche derart vorgegeben sein, dass im eingedrehten Zustand der Stellschraube zwischen dem Klemmabschnitt und der Klemmfläche ein Spalt gebildet ist, der kleiner als die Wandstärke des zu befestigenden Hohlprofils ist. Dadurch kann ebenfalls eine stabile und sichere Klemmung bereitgestellt werden.

Des Weiteren kann vorgesehen sein, dass in dem den Absatz überlappenden Wandbereich des Bodenabschnitts eine konzentrisch zur Gewindebohrung angeordnete Bohrung für die Stellschraube ausgebildet ist. Dadurch ist die Stellschraube von außen zugänglich, wodurch das Einstellen der Klemmeinheit vereinfacht wird. Insbesondere ist die Bohrung gewindelos ausgebildet und weist einen Durchmesser auf, der größer als oder gleich einem Durchmesser des Schraubenkopfes der Stellschraube ist. Dadurch wird eine optische ansprechende Anschlussvorrichtung bereitgestellt, da der Schraubenkopf vollständig in die Bohrung eintauchen kann.

Weiterhin kann der Stützabschnitt des Klemmelements eine Durchgangsbohrung für den Schraubenschaft der Stellschraube aufweisen. Dadurch wird eine verliersichere Befestigung des Klemmelements am Grundkörper bereitgestellt, die zudem den Aufbau der Klemmeinheit vereinfacht. Die Durchgangsbohrung im Stützabschnitt kann gewindelos ausgebildet sein. Weiterhin kann zwischen dem Schraubenschaft und der Durchgangsbohrung ein definiertes Spiel sein. Dadurch kann das Klemmelement um die Schraubenachse mit einem bestimmten Radius kippen. Beim Einstecken des Hohlprofils in den Hülsenabschnitt kann somit das Hohlprofil den Klemmabschnitt bei gelockerter Stellschraube anheben, sodass das Hohlprofil mit seinem Profilwandbereich zwischen den Klemmabschnitt und die Klemmfläche geschoben werden kann. Insbesondere weist der Schraubenschaft der Stellschraube nur an einem Endabschnitt, mit dem die Stellschraube in die Gewindebohrung eingeschraubt ist, ein Außengewinde auf. Der Abschnitt des Schraubenschaftes, mit dem die Stellschraube die Durchgangsbohrung im Stützabschnitt des Klemmelements durchgreift, ist vorzugsweise gewindelos ausgebildet.

Des Weiteren kann der Klemmabschnitt einen Vorsprung aufweisen, der an einer von der Stützfläche abgewandten Unterseite des Klemmelements angeordnet ist. Die Unterseite des Klemmabschnitts ist der Klemmfläche zugewandt. Dadurch kann das Klemmelement mit dem Vorsprung gegen Profilwandbereich des zu befestigenden Hohlprofils drücken. Insbesondere ist der Vorsprung an einem freien axialen Ende des Klemmabschnitts angeordnet. Der Vorsprung kann sich in der Querrichtung über die gesamte Breite des Klemmabschnitts erstrecken.

Eine besonders stabile Befestigung der Anschlussvorrichtung am Hohlprofil wird erreicht, wenn der Vorsprung zumindest eine Schneide aufweist. Die Schneide ist eine scharfe Kante, mit der sich der Vorsprung in den Profilwandbereich des zu befestigenden Hohlprofils eindrücken kann. Dies führt zu einer bewussten Beschädigung der Innenseite des Profilwandbereichs, die jedoch ein Festkrallen des Klemmabschnitts am Hohlprofil bewirkt. Vorzugsweise weist der Vorsprung zwei voneinander beabstandete Schneiden auf. Dadurch kann das Klemmelement mit verhältnismäßig geringem Kraftaufwand in den Profilwandbereich des zu haltenden Hohlprofils eingedrückt werden.

Um eine besonders stabile Befestigung der Anschlussvorrichtung an dem zu befestigenden Hohlprofil zu ermöglichen, weist der Hülsenabschnitt eine zur Außenkontur des zu befestigenden Hohlprofils korrespondierende Innenkontur auf. Zum Überführen des Hohlprofils in die Steckstellung wird dieses durch die Einführöffnung in den Hülsenabschnitt eingesteckt, respektive eingeschoben. Der Hülsenabschnitt kann eine um die Längsachse angeordnete Hülsenwand aufweisen, die im Inneren einen Aufnahmeraum für das zu befestigende Hohlprofil umschließt. Bezogen auf den Querschnitt können die Innenmaße des Hülsenabschnitts zumindest im Wesentlichen den Außenmaßen des zu befestigenden Hohlprofils entsprechen, sodass das Hohlprofil ohne Werkzeug mit der Hand eingesteckt werden kann. Die Hülsenwand kann die Längsachse unterbrechungsfrei umschließen. In ganz bevorzugter Weise ist der Hülsenabschnitt um ein Vielfaches kürzer als die Länge des zu befestigenden Hohlprofils. Die Länge des Hülsenabschnitts kann beispielsweise zwischen 30 Millimeter und 200 Millimeter betragen.

Gemäß einer ersten Ausgestaltung kann die Anschlussvorrichtung zum Befestigen an einem im Querschnitt kreisringförmig ausgebildeten Hohlprofil, insbesondere einem zylindrischen Rohr, gestaltet sein. Zweckmäßigerweise kann der Hülsenabschnitt im Querschnitt eine zur Längsachse eine kreisförmige Innenkontur aufweisen. Insbesondere ist der Querschnitt des Hülsenabschnitts kreisringförmig ausgebildet, sodass auch die Außenkontur kreisförmig sein kann. Der Innendurchmesser des Hülsenabschnitts kann geringfügig größer als der Außendurchmesser der im Querschnitt kreisförmig gestalteten Außenkontur des Hohlprofils sein, um das Hohlprofil per Hand in den Hülsenabschnitt einstecken zu können. Der Vorsprung kann zwei Schneiden aufweisen. Diese können sich beim Verlagern des Klemmabschnitts hin zur Klemmfläche in den konkav gebogenen Profilwandbereichs des zu befestigenden Hohlprofils eindrücken. Insbesondere kontaktiert der Klemmabschnitt das zu befestigende Hohlprofil nur entlang der seitlich am Vorsprung ausgebildeten Schneiden, wodurch sich der Vorsprung besser in den Profilwandbereich eindrücken kann. Vorzugsweise sind die beiden Schneiden im Querschnitt zur Längsachse an beiden Querenden des Vorsprungs ausgebildet und schließen gemeinsam einen Winkel ein, der größer als 45 Grad und kleiner als 135 Grad ist. Dadurch wird eine Anschlussvorrichtung mit einer besonders stabilen Befestigung an einem im Querschnitt kreisringförmigen Hohlprofil bereitgestellt.

Gemäß einer zweiten Ausgestaltung kann die Anschlussvorrichtung zum Befestigen an einem im Querschnitt eckig ausgebildeten Hohlprofil, zum Beispiel einem Vierkantrohr gestaltet sein. Zweckmäßigerweise kann der Hülsenabschnitt im Querschnitt zur Längsachse eine rechteckige Innenkontur und insbesondere auch eine rechteckige Außenkontur aufweisen. Die lichte Höhe und/oder lichte Breite der Hülsenwand des Hülsenabschnitts können/kann geringfügig größer als die Höhe beziehungsweise Breite des Hohlprofils sein, um das Hohlprofil per Hand in den Hülsenabschnitt einstecken zu können. Der Vorsprung kann zumindest eine sich in der Querrichtung erstreckende Aussparung aufweisen. Der Vorsprung kann zumindest zwei voneinander beabstandete Vorsprungsabschnitte mit je einer Schneide aufweisen. Der Vorsprung kann zahnartig ausgebildet sein, wodurch sich der Vorsprung mit den Vorsprungsabschnitten besser in den Profilwandbereich eindrückbar ist. Die Schneiden können auf einer gedachten Gerade liegen, wodurch die Vorsprungsabschnitte gleich lang sind. Dies erhöht die Stabilität des Klemmelements und der Klemmverbindung zwischen der Anschlussvorrichtung und dem zu befestigenden Hohlprofil.

Um das Einführen des Hohlprofils in den Hülsenabschnitt weiter zu vereinfachen, kann das Klemmelement an einem der Einführöffnung zugewandten Stirnseite eine Stirnfläche aufweisen, die mit der Längsachse einen Winkel von mehr als 90 Grad und weniger als 160 Grad einschließt. Die Stirnfläche kann auch eine erste Stirnfläche sein, die mit einer an der Stirnseite ausgebildeten zweiten Stirnfläche einen Winkel von mindestens 90 Grad einschließen kann, wobei der Winkel maximal 140 Grad betragen kann. Auf diese Weise wird die Montage der Anschlussvorrichtung vereinfacht, da der Monteur beim Einstecken des Hohlprofils in den Hülsenabschnitt die Anschlussvorrichtung beliebig halten kann. Die zumindest eine Stirnfläche bildet somit eine Einführschräge.

Zweckmäßigerweise ist das Klemmelement ein starres Bauteil, um die Klemmkräfte besonders gut auf das zu klemmende Hohlprofil übertragen zu können. Insbesondere kann das Klemmelement aus Metall, vorzugsweise aus Stahl hergestellt sein. Das Klemmelement kann eine längliche Grundform aufweisen. Mit anderen Worten kann eine Längserstreckung (Länge) größer als eine Quererstreckung (Breite) sein. Vorzugsweise ist die Länge des Klemmelements auch größer als dessen Hocherstreckung (Höhe). Vorzugsweise weist das Klemmelement über den Stützabschnitt und den Klemmabschnitt hinweg eine konstante Breite auf. Des Weiteren können der Stützabschnitt und der Klemmabschnitt entlang der Längsachse hintereinander und vorzugsweise unmittelbar aneinander angrenzende Abschnitte des Klemmelements sein. Um eine besonders einfach zu montierende Anschlussvorrichtung bereitzustellen, kann die Klemmeinheit nur aus dem Klemmelement und der Stellschraube bestehen. Vorzugsweise handelt es sich bei dem Klemmelement, der Stellschraube und dem Grundkörper um baulich voneinander getrennte Einzelbauteile. Insbesondere ist das Klemmelement nur über die Stellschraube an dem Grundkörper befestigt ist. Wenn die Stellschraube vollständig herausgedreht ist, kann das Klemmelement durch die Einführöffnung aus dem Grundkörper entnommen werden.

Gemäß einer weiteren Ausgestaltung kann der Grundkörper einen Anschlussabschnitt mit einer Verbindungsbohrung für eine Verbindungsschraube zum Verbinden des Grundkörpers mit einem Halter aufweisen. Insbesondere kann die Anschlussvorrichtung den Halter umfassen. Der Halter kann ein Wandhalter zum Befestigen der Anschlussvorrichtung an einem ortsfesten Bauteil, insbesondere einer Gebäudewand sein. Alternativ kann der Anschlussabschnitt des Grundkörpers direkt an dem ortsfesten Bauteil befestigt, insbesondere festgeschraubt werden, sodass dann auf einen separaten Wandhalter verzichtet werden kann. Der Glashalter kann ein Halter zum Halten eines Flächenelements, insbesondere einer Glasscheibe sein. Alternativ kann der Anschlussabschnitt des Grundkörpers einen Halteschlitz zur Aufnahme des Flächenelements aufweisen, sodass dann auf einen separaten Glashalter verzichtet werden kann. Vorzugsweise weisen die Verbindungsschraube und die Stellschraube einen gleichen Schraubenkopfantrieb mit gleicher Antriebsgröße auf. Dies vereinfacht die Montage, da der Monteur dasselbe Werkzeug für die Schrauben verwenden kann. Insbesondere können die Schrauben identisch gestaltet sein.

Des Weiteren kann der Grundkörper ein einteiliges, respektive monolithisches Bauteil sein. Insbesondere ist der Grundkörper ein starrer Körper, der beispielsweise aus Metall oder einem Kunststoff hergestellt sein kann. Dadurch wird eine stabile und einfach zu montierende Anschlussvorrichtung bereitgestellt.

Eine weitere Lösung der oben genannten Aufgabe besteht in einem Stabilisierungsset mit einem Hohlprofil und zumindest einer von der vorbeschriebenen Anschlussvorrichtung zum Befestigen an dem Hohlprofil. Durch das erfindungsgemäße Stabilisierungsset ergeben sich dieselben Vorteile, wie sie im Zusammenhang mit der erfindungsgemäßen Anschlussvorrichtung beschrieben worden sind, sodass hier abkürzend auf obige Beschreibung Bezug genommen wird. Dabei versteht es sich, dass alle genannten Ausgestaltungen der Anschlussvorrichtung auf das Stabilisierungsset übertragbar sind und umgekehrt. Insgesamt ermöglicht das erfindungsgemäße Stabilisierungsset eine stabile und belastbare Befestigung zwischen der Anschlussvorrichtung und dem Hohlprofil.

Der Klemmabschnitt ist in dem vom Hohlprofil umschlossenen Hohlraum anordbar beziehungsweise in der Steckstellung angeordnet. In der Steckstellung kann die Längsachse der Anschlussvorrichtung einer Mittellängsachse des Hohlprofils entsprechen. Durch Betätigen der Stellschraube kann die Klemmeinheit von einer Losstellung in eine Klemmstellung überführt werden. In der Klemmstellung ist der Stützabschnitt des Klemmelements gegen den Bodenabschnitt des Grundkörpers verspannt. In der Losstellung kann der Klemmabschnitt so weit weg von der Klemmfläche verlagert werden, dass der Abstand zwischen dem Klemmabschnitt und der Klemmfläche zumindest der Wandstärke des Hohlprofils entspricht. Beim Einstecken des Hohlprofils in den Hülsenabschnitt kann in der Losstellung das Hohlprofil den Klemmabschnitt anheben und sich mit dem Profilwandabschnitt zwischen dem Klemmabschnitt und der Klemmfläche dazwischen schieben. Im vollständig eingesteckten Zustand (Steckstellung) ist dann der Klemmabschnitt in dem Hohlraum des Hohlprofils angeordnet. Durch Eindrehen der Stellschraube kann die Klemmeinheit aus der Losstellung in die Klemmstellung überführt werden. Dabei verlagert sich der Klemmabschnitt weiter hin zur Klemmfläche, wodurch der zwischen dem Klemmabschnitt und der Klemmfläche angeordnete Profilwandbereich des Hohlprofils eingeklemmt wird. Zur Erhöhung der Stabilität und Belastbarkeit in Zugrichtung entlang der Längsachse der Klemmverbindung kann weiter vorgesehen sein, dass die aufgebrachten Klemmkräfte derart hoch sind, dass der Klemmabschnitt, insbesondere mit der zumindest einen Schneide, innenseitig in den Profilwandbereich des Hohlprofils eindrückbar beziehungsweise eingedrückt ist.

Weiterhin kann das Stabilisierungsset das Hohlprofil und zwei der Anschlussvorrichtungen umfassen, sodass an beiden Enden des Hohlprofils eines der beiden Anschlussvorrichtungen befestigt sein kann. Insbesondere kann eine der beiden Anschlussvorrichtungen den Wandhalter und eine andere der beiden Anschlussvorrichtungen den Glashalter umfassen.

Eine weitere Lösung der oben genannten Aufgabe besteht in einer Stabilisierungsanordnung mit einem Flächenelement und zumindest einem von dem vorbeschriebenen Stabilisierungsset. Durch die erfindungsgemäße Stabilisierungsanordnung ergeben sich dieselben Vorteile, wie sie im Zusammenhang mit der erfindungsgemäßen Anschlussvorrichtung beziehungsweise dem erfindungsgemäßen Stabilisierungsset beschrieben worden sind, sodass hier abkürzend auf obige Beschreibung Bezug genommen wird. Dabei versteht es sich, dass alle genannten Ausgestaltungen der Anschlussvorrichtung beziehungsweise des Stabilisierungssets auf die Stabilisierungsanordnung übertragbar sind und umgekehrt. Insgesamt ermöglicht die erfindungsgemäße Stabilisierungsanordnung eine stabile und belastbare Abstützung des Flächenelements gegenüber einem ortsfesten Bauteil. Der Glashalter kann insbesondere einen Teilabschnitt des oberen Randes des Flächenelements umgreifen. Das Flächenelement kann beispielsweise eine Glasscheibe sein, die am unteren Ende zum Beispiel gegen einen Gebäudeboden abgestützt ist. Der Wandhalter kann an dem ortsfesten Bauteil, insbesondere eine Gebäudewand befestigt sein.

Bevorzugte Ausführungsbeispiele der vorliegenden Erfindung werden in den Zeichnungen dargestellt und nachstehend beschrieben. Hierin zeigt:
- Figur 1: eine Anschlussvorrichtung gemäß einer ersten Ausführungsform in Explosionsansicht von schräg oben;
- Figur 2: die Anschlussvorrichtung aus Figur 1 in Seitenansicht;
- Figur 3: die Anschlussvorrichtung aus Figur 1 in Längsschnittansicht, wobei eine Klemmeinheit der Anschlussvorrichtung in einer Losstellung gezeigt ist;
- Figur 4: die Anschlussvorrichtung aus Figur 3 und ein eingestecktes Hohlprofil in Längsschnittansicht;
- Figur 5: die Anschlussvorrichtung aus Figur 4 und das eingesteckte Hohlprofil in Längsschnittansicht, wobei die Klemmeinheit in einer Klemmstellung gezeigt ist;
- Figur 6: die Anschlussvorrichtung zusammen mit dem eingesteckten Hohlprofil in Schnittansicht entlang der in Figur 4 gezeigten Linie VI-VI;
- Figur 7: ein Klemmelement der Anschlussvorrichtung aus Figur 1 in perspektivischer Ansicht von schräg oben;
- Figur 8: das Klemmelement aus Figur 7 in Seitenansicht;
- Figur 9: das Klemmelement aus Figur 7 in Stirnansicht;
- Figur 10: eine vereinfacht dargestellte und vergrößerte Teilansicht eines Teilbereichs aus Figur 3;
- Figur 11: eine Anschlussvorrichtung gemäß einer zweiten Ausführungsform in Explosionsansicht von schräg oben;
- Figur 12: eine Stabilisierungsanordnung gemäß einer Ausführungsform mit der Anschlussvorrichtung aus Figur 1 und der Anschlussvorrichtung aus Figur 11 in perspektivischer Ansicht von schräg oben;
- Figur 13: eine Anschlussvorrichtung gemäß einer dritten Ausführungsform in Explosionsansicht von schräg oben;
- Figur 14: eine Anschlussvorrichtung gemäß einer vierten Ausführungsform in Explosionsansicht von schräg oben;
- Figur 15: ein Klemmelement der Anschlussvorrichtung nach Figur 13 beziehungsweise Figur 14 in Stirnansicht;
- Figur 16: die Anschlussvorrichtung aus Figur 13 zusammen mit dem eingesteckten Hohlprofil in Stirnansicht;
- Figur 17: das Klemmelement aus Figur 15 in Seitenansicht; und
- Figur 18: eine Stabilisierungsanordnung gemäß einer weiteren Ausführungsform mit der Anschlussvorrichtung aus Figur 13 und der Anschlussvorrichtung aus Figur 14 in perspektivischer Ansicht von schräg oben.

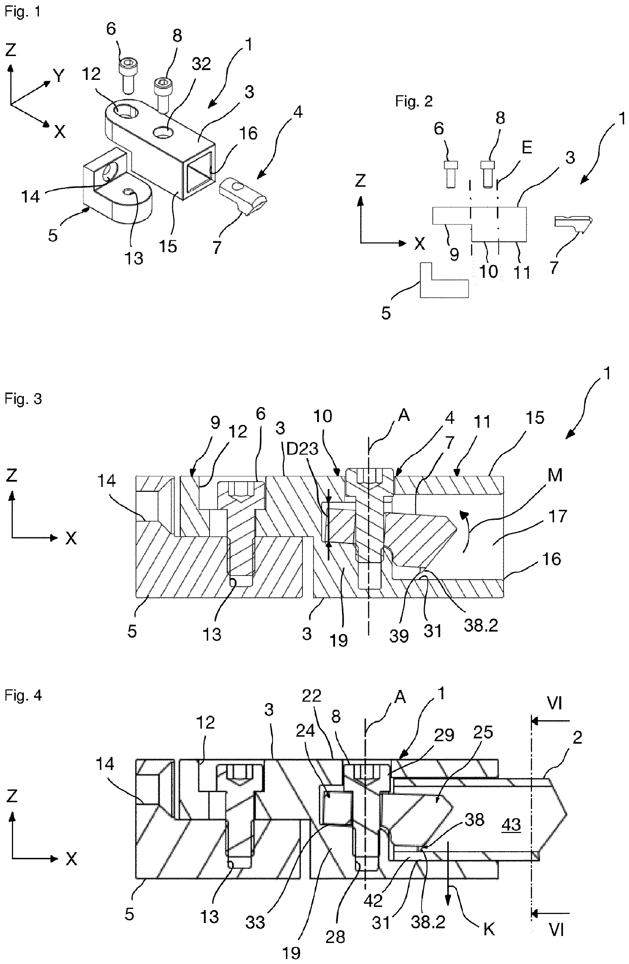

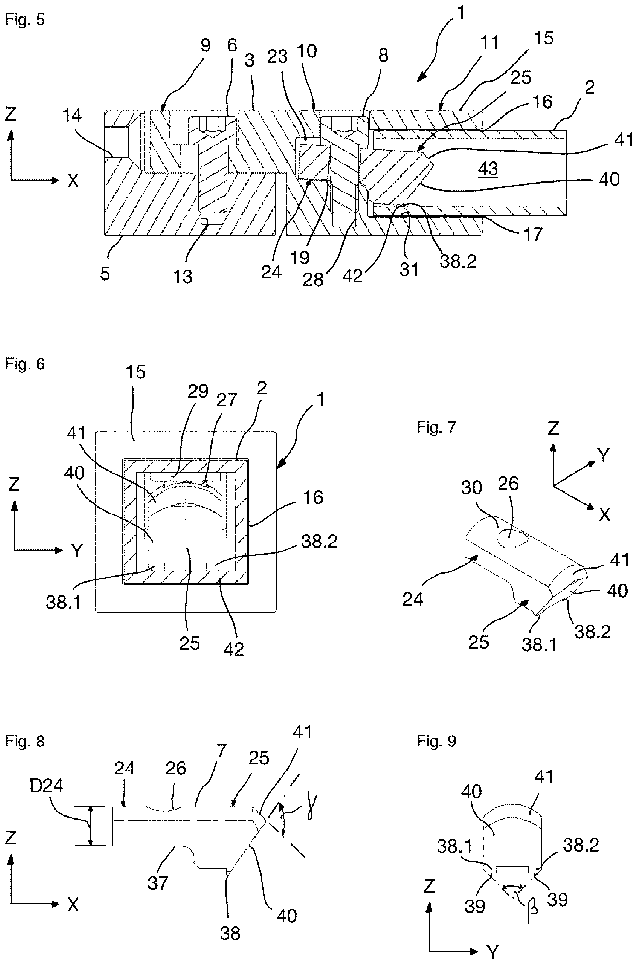

In den Figuren 1 bis 10 ist eine Anschlussvorrichtung 1 zum Befestigen an einem Hohlprofil 2 gemäß einer ersten Ausführungsform dargestellt. Zur Verdeutlichung der Funktionsweise der Anschlussvorrichtung 1 ist diese in den Figuren 4 bis 6 zusammen mit dem eingesteckten Hohlprofil 2 gezeigt. Die Anschlussvorrichtung 1 und das Hohlprofil 2 bilden zusammen ein erfindungsgemäßes Stabilisierungsset. In den Figuren 7 bis 9 ist ein einzelnes Bauteil der Anschlussvorrichtung 1 im Detail dargestellt.

Zur Verdeutlichung der Ausrichtung der Anschlussvorrichtung 1 im Raum sind in den Figuren 1 bis 10 jeweils ein kartesisches Koordinatensystem mit einer Längsachse X, einer Querachse Y und einer Hochachse Z eingezeichnet. Räumliche Angaben, wie oben, unten, links, rechts, sind als auf die jeweilige Figur bezogen zu verstehen.

Die Anschlussvorrichtung 1 umfasst einen Grundkörper 3, eine Klemmeinheit 4 und, hier, einen Wandhalter 5, der mittels einer Verbindungsschraube 6 mit dem Grundkörper 3 verschraubt ist. Die Klemmeinheit 4 weist ein Klemmelement 7 und eine Stellschraube 8 auf. Eine Schraubenachse A der Stellschraube 8 ist senkrecht zur Längsachse X ausgerichtet und kann, wie hier gezeigt, parallel zur Hochachse Z verlaufen. Die Verbindungsschraube 6 und die Stellschraube 8 haben vorzugsweise einen gleichen Schraubenkopfantrieb mit gleicher Antriebsgröße auf. Dadurch kann dasselbe Werkzeug zum Betätigen der Schrauben 6, 8 verwendet werden, wodurch die Montage vereinfacht wird. Zweckmäßigerweise kann es sich bei beiden Schrauben 6 und 8 um identische Schrauben handeln. Insbesondere in den Figuren 3 bis 5 ist erkennbar, dass die Schraubenachse der Verbindungsschraube 6 parallel zur Schraubenachse A ausgerichtet sein kann.

Der Grundkörper 3 ist vorzugsweise ein einteiliges, respektive monolithisches Bauteil. Der Grundkörper 3 ist ein starrer Körper, der beispielsweise aus Metall oder einem Kunststoff hergestellt sein kann. Weiterhin ist der Grundkörper 3 länglich gestaltet und weist, entlang der Längsachse X vom wandseitigen Ende hin zum stirnseitigen Ende, einen Anschlussabschnitt 9, einen Bodenabschnitt 10 und einen Hülsenabschnitt 11 auf. Zur Verdeutlichung der entlang der Längsachse X hintereinander angeordneten Abschnitte 9, 10, 11 sind in der Figur 2 zwei Hilfslinien eingezeichnet, die den Anschlussabschnitt 9 vom Bodenabschnitt 10 beziehungsweise den Bodenabschnitt 10 vom Hülsenabschnitt 11 trennt. Der Grundkörper 3 ist im Übergang vom Bodenabschnitt 10 zum Anschlussabschnitt 9 gestuft ausgebildet, sodass der Anschlussabschnitt 9 eine gegenüber dem Bodenabschnitt 10 reduzierte Höhe aufweist. In dem dadurch gebildeten Freiraum setzt der Wandhalter 5 am Grundkörper 3 an. Hierzu ist in dem Anschlussabschnitt 9 eine Verbindungsbohrung 12 für die Verbindungsschraube 6 ausgebildet, die mit einer Sacklochbohrung 13 im Wandhalter 5 fluchtet. Die Verbindungsschraube 6 stützt sich mit ihrem Schraubenkopf oberseitig am Anschlussabschnitt 9 ab. Der Schraubenschaft der Verbindungsschraube 6 greift durch die Verbindungsbohrung 12 hindurch und ist endseitig in ein Gewinde der Sacklochbohrung 12 des Wandhalters 5 eingeschraubt. Der Wandhalter 5 wiederum weist eine wandseitige Bohrung 14 zum Befestigen des Wandhalters 5 beziehungsweise der Anschlussvorrichtung 1 an einer nicht gezeigten Wand, beispielsweise einer ortsfesten Gebäudewand, oder einem anderen vertikal aufstehenden Bauteil mittels nicht gezeigter Schrauben auf.

Der Hülsenabschnitt 11 weist eine um die Längsachse X umlaufende Hülsenwand 15 auf, die, hier, im Querschnitt rechteckig, insbesondere quadratisch ausgebildet ist. An einem ersten axialen Ende des Hülsenabschnitts 11 ist somit eine im Querschnitt rechteckige, insbesondere quadratische Einführöffnung 16 ausgebildet. Die Einführöffnung 16 liegt in einer Ebene, die parallel zu einer von der Querachse Y und der Hochachse Z aufgespannten Ebene liegt. Damit umschließt die Hülsenwand 15 einen einseitig offenen Aufnahmeraum 17 für das Hohlprofil 2, sodass das Hohlprofil 2 stirnseitig durch die Einführöffnung 16 in den Hülsenabschnitt 11 eingesteckt werden kann. Insbesondere in der Figur 6 ist gut erkennbar, dass sich die Anschlussvorrichtung 1 aufgrund der hier gezeigten Geometrie des Hülsenabschnitts 11 zum Befestigen an einem Hohlprofil 2 eignet, das eine im Querschnitt rechteckige, insbesondere quadratische Außenkontur umfasst. Das zu befestigende Hohlprofil 2 kann beispielsweise ein längliches Vierkantrohr sein.

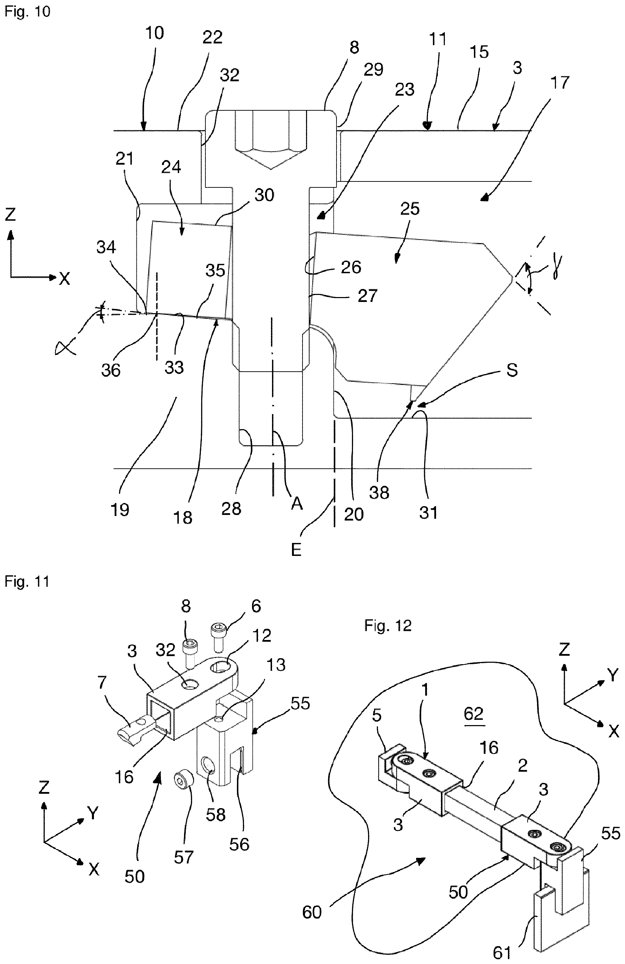

An ein wandseitiges beziehungsweise zweites axiales Ende des Hülsenabschnitts 11 schließt sich der Bodenabschnitt 10 an, der axial zur Längsachse X zwischen dem Anschlussabschnitt 9 und dem Hülsenabschnitt 11 angeordnet ist. Der Bodenabschnitt 10 weist einen Boden 18 auf, der unter Bildung eines Absatzes 19 gestuft ausgebildet ist. Eine der Einführöffnung 16 zugewandte und parallel zu dieser ausgerichtete Absatzfläche 20 des Absatzes 19 begrenzt den Aufnahmeraum 17 bodenseitig. Die Absatzfläche 20 liegt in einer gedachten Ebene E, die den Hülsenabschnitt 11 vom Bodenabschnitt 10 trennt. Die Ebene E ist in der Figur 10 eingezeichnet. Ein gegenüber der Absatzfläche 20 axial zurückgestellter Bereich 21 des gestuften Bodens 18 kann parallel zur Absatzfläche 20 ausgerichtet sein. Zwischen dem Absatz 19 und einem den Absatz 19 entlang der Längsachse X überlappenden Wandbereich 22 des Bodenabschnitts 10 ist eine Vertiefung 23 ausgebildet. Die Vertiefung 23 im Bodenabschnitt 10 bildet gemeinsam mit dem Aufnahmeraum 17 im Hülsenabschnitt 11 einen zusammenhängenden, hohlen Innenraum innerhalb des Grundkörpers 3. Das bodenseitige Ende des Innenraums kann somit vollständig durch den Boden 18 verschlossen sein. Das Hohlprofil 2 kann nur über die Einführöffnung 16 in den vom Hülsenabschnitt 11 definierten Aufnahmeraum 17 eingesteckt werden.

Das Klemmelement 7 der Klemmeinheit 4 ist ein starres, insbesondere metallisches Bauteil, das in der Vertiefung 23 und dem Aufnahmeraum 17 angeordnet ist. Konkret weist das Klemmelement 7 einen Stützabschnitt 24, der in der Vertiefung 23 des Bodenabschnitts 10 angeordnet ist, und einen Klemmabschnitt 25 auf, der im Aufnahmeraum 17 des Hülsenabschnitts 11 angeordnet ist. Die beiden Abschnitte 24, 25 sind somit entlang der Längsachse X hintereinander angeordnet und können unmittelbar aneinander angrenzen. Vorzugsweise besteht das Klemmelement 7 nur aus dem Stützabschnitt 24 und dem Klemmabschnitt 25. Der Stützabschnitt 24 kann eine im Wesentlichen quaderförmige Grundform aufweisen. Im Übergang vom Stützabschnitt 24 in den Klemmabschnitt 25 ist das Klemmelement 7 gestuft ausgebildet, wodurch das Klemmelement 7 eine im Wesentlichen hakenförmige Grundform hat. Der Klemmabschnitt 25 ist ausgehend von der Stellschraube 8 in Richtung der Einführöffnung 16 vom Absatz 19 beabstandet.

Das Klemmelement 7 ist nur über die Stellschraube 8 mit dem Bodenabschnitt 10 verbunden, wie in den Figuren 3 bis 5 und 10 deutlich erkennbar ist. Hierzu ist im Stützabschnitt 24 eine gewindelose Durchgangsbohrung 26 für die Stellschraube 8 ausgebildet, durch die sich ein Schraubenschaft 27 der Stellschraube 8 hindurch erstreckt. Der Schraubenschaft 27 weist ein Außengewinde auf, mit dem die Stellschraube 8 endseitig in eine im Absatz 19 ausgebildete und, hier als Sackloch gestaltete, Gewindebohrung 28 eingeschraubt ist. Entlang der Durchgangsbohrung 26 kann der Schraubenschaft 27 der Stellschraube 8 gewindelos sein. An einer vom Absatz 19 abgewandten Oberseite des Klemmelements 7 ist eine Stützfläche 30 ausgebildet, an der sich ein Schraubenkopf 29 der Stellschraube 8 zum Verlagern des Klemmabschnitts 24 hin zu einer Klemmfläche 31 abstützen kann. Die Klemmfläche 31 ist innenseitig an der Hülsenwand 15 ausgebildet. In dem den Absatz 19 überlappenden Wandbereich 22 des Bodenabschnitts 10 ist konzentrisch zur Gewindebohrung 28 eine gewindelose Bohrung 32 für die Stellschraube 8 ausgebildet. Der Durchmesser der Bohrung 32 ist größer als oder zumindest gleich groß wie der Durchmesser des Schraubenkopfes 29 der Stellschraube 8. Somit ist die Stellschraube 8 von außen zugänglich und kann im eingedrehten Zustand mit dem Schraubenkopf 29 in der Bohrung 32 eintauchen. Mit der Stellschraube 8 ist der Stützabschnitt 24 somit gegen eine dem Stützabschnitt 24 zugewandte Gegenfläche 33 des Absatzes 19 verspannbar.

Die Gegenfläche 33 ist gegenüber der Klemmfläche 31 axial zur Schraubenachse A versetzt angeordnet. Durch den Absatz 19 ist die Gegenfläche 33 somit gegenüber der Klemmfläche 31 erhöht angeordnet, bezogen auf die Hochachse Z. Weiterhin weist die Gegenfläche 31 im Längsschnitt ausgehend vom zurückgestellten Bodenbereich 21 zunächst ein parallel zur Längsachse X ausgerichtetes erstes Flächensegment 34 und ein sich daran anschließendes schräg zur Längsachse X ausgerichtetes zweites Flächensegment 35 auf. Das zweite Flächensegment 35 schließt mit der Längsachse X einen Winkel α ein, der sich zur Einführöffnung 16 hin öffnet. Der Winkel α ist in der Figur 10 eingezeichnet. Der Winkel α kann von 2 Grad bis 20 Grad betragen, wobei besonders gute Ergebnisse mit einem Winkel α in einem Bereich von 4 Grad bis 10 Grad erzielt wurden. Das Verhältnis zwischen der Längserstreckung des ersten Flächensegments 34 zur Längserstreckung des zweiten Flächensegments 35 kann zwischen 1 zu 3 und 1 zu 10 liegen. Zwischen den beiden Flächensegmenten 34, 35 ist eine parallel zur Querachse Y verlaufende Kante ausgebildet, die als Kipplinie 36 bezeichnet wird. In der Figur 10 ist der Übergang zwischen den beiden Flächensegmenten 34, 35 und der dazwischenliegenden Kipplinie 36, die in dem Längsschnitt nur als Punkt darstellbar ist, mit gestrichelter Hilfslinie hervorgehoben.

Beim Eindrehen der Stellschraube 8 in die Gewindebohrung 28 drückt der Schraubenkopf 29 gegen die Stützfläche 30 und spannt den Stützabschnitt 24 gegen die Gegenfläche 33 des Absatzes 19. Dabei liegt der Stützabschnitt 24 auf der Kipplinie 36 auf und kippt aufgrund des schräg ausgerichteten zweiten Flächensegments 35 und der Anordnung der Kipplinie 36 bodenwärts der Schraubenachse A um einen begrenzten Radius um die Schraubenachse A. Mit anderen Worten vollzieht das Klemmelement 7 eine Drehbewegung um die Querachse Y um einen begrenzten Drehwinkel, dessen maximale Größe dem Winkel a, mit dem das zweite Flächensegment 35 zur Längsachse X ausgerichtet ist, entsprechen kann. Diese gekippte Stellung nimmt das Klemmelement 7 aufgrund seines höheren Eigengewichts im Vergleich zum Stützabschnitt 24 von sich aus ein, sobald die Stellschraube 8 rausgedreht wird, wie in der Figur 10 gezeigt. Wenn das Hohlprofil 2 eingesteckt ist, drückt dieses den Klemmabschnitt 25 wieder etwas an. Beim anschließenden Festdrehen der Stellschraube 8 wird der Klemmabschnitt 25 weder hin zu der Klemmfläche 31 gedrückt, die innenseitig an der Hülsenwand 15 ausgebildet ist.

Um das Kippen weiter zu begünstigen, ist zwischen dem Schraubenschaft 27 der Stellschraube 8 und der Durchgangsbohrung 24 ein definiertes Spiel vorhanden. Weiterhin weist die Vertiefung 23 eine Mindesthöhe, respektive bezüglich der Schraubenachse A axiale Erstreckung D23 auf, die größer als eine Dicke D24 des Stützabschnitts 24 ist. Vorzugsweise ist die Höhe der Vertiefung 23 derart, dass das Klemmelement 7 um bis zu 20 Grad um die Schraubenachse A kippen kann, ohne dabei an den Wandbereich 22 zu stoßen. Weiterhin ist zwischen dem Klemmabschnitt 25 und dem Absatz 19 ein axialer Abstand gebildet, sodass der hakenförmige Klemmabschnitt 25 beim Kippen nicht am Absatz 19 anschlägt.

An einer von der Stützfläche 30 abgewandten Unterseite 37 des Klemmelements 7 kann der Klemmabschnitt 25 einen Vorsprung 38 aufweisen. In der Figur 8 ist erkennbar, dass der Vorsprung 38 an einem freien axialen Ende des Klemmabschnitts 25 ausgebildet sein kann. Der Vorsprung 38 weist eine zentrale Aussparung auf, sodass der Vorsprung 38 aus, hier zwei, zahnartigen Vorsprungsabschnitten 38.1, 38.2 besteht. Die beiden Vorsprungsabschnitte 38.1, 38.2 weisen jeweils eine im Querschnitt zur Längsachse geradlinige Schneide 39 auf. An voneinander abgewandten Enden können die beiden Vorsprungsabschnitte 38.1, 38.2 abgeschrägte oder abgerundete Kanten aufweisen. Insbesondere in der Figur 10 ist erkennbar, dass der Vorsprung 38 in der zur Klemmfläche 31 gekippten Stellung weiterhin von der Klemmfläche 31, respektive der Hülsenwand 15 unter Bildung eines Spalt S beabstandet ist. Um das Einführen des zu befestigenden Hohlprofils 2 in den Hülsenabschnitt 11 zu vereinfachen, kann der Klemmabschnitt 25 an einer der Einführöffnung 16 zugewandten Stirnseite eine erste Stirnfläche 40 und eine zweite Stirnfläche 41 aufweisen, die schräg zueinander angeordnet sind. Die beiden Stirnflächen 40, 41 schließen einen sich zum Stützabschnitt 24 hin öffnenden Winkel γ ein, der, wie in Figur 10 gezeigt, beispielsweise etwa 110 Grad betragen kann. Grundsätzlich kann der Winkel γ auch größer oder kleiner als die hier gezeigten 110 Grad sein und kann in einem Bereich von 90 Grad bis 140 Grad liegen. Die erste Stirnfläche 40 ist flächenmäßig größer als die zweite Stirnfläche 41. Die Stirnflächen 40, 41 können auch als Einführschrägen bezeichnet werden.

Zum Befestigen der Anschlussvorrichtung 1 an einem Hohlprofil 2 befindet sich die Klemmeinheit 4 zunächst in einer Losstellung, die in den Figuren 3 und 10 gezeigt ist. Die Stellschraube 8 ist in der Gewindebohrung 28 eingeschraubt, allerdings ist diese soweit gelockert, dass das Klemmelement 7 um die Schraubenachse A kippen kann. In der Losstellung kann dann das zu befestigende Hohlprofil 2 durch die Einführöffnung 16 in den Hülsenabschnitt 2 eingesteckt werden. Hierbei stößt das Hohlprofil 2 zunächst an die erste Stirnfläche 40 des Klemmelements 7, oder bei Montage "auf dem Kopf" an die zweite Stirnfläche 41. Beim weiteren Einschieben drückt das Hohlprofil 2 den Klemmabschnitt 25 an und schiebt sich mit einem Profilwandbereich 42 des Hohlprofils 2 durch den zwischen dem Vorsprung 38 und der Klemmfläche 31 gebildeten Spalt S. Dabei vollzieht das Klemmelement 7 eine geringe Kippbewegung um die Schraubenachse A beziehungsweise eine Drehbewegung um die Querachse Y nach oben, wie in der Figur 3 mit dem Pfeil M angedeutet.

In der Figur 4 ist das Hohlprofil 2 in den Hülsenabschnitt 11 vollständig eingesteckt dargestellt (Steckstellung). Erkennbar ist, dass der Klemmabschnitt 25 nun innerhalb eines Hohlraums 43 des Hohlprofils 2 angeordnet ist und mit den beiden zahnartig ausgebildeten Vorsprungsabschnitten 38.1, 38.2 auf der Innenseite des Profilwandbereichs 42 des Hohlprofils 2 aufliegt. Die Stellschraube 8 wurde gegenüber dem in der Figur 3 gezeigten gelösten Zustand weiter eingeschraubt. Wenn die Stellschraube 8 festgezogen wird, wird der Stützabschnitt 24 des Klemmelements 7 von dem Schraubenkopf 29 gegen die Gegenfläche 33 des Absatzes 19 gedrückt und der Klemmabschnitt 25, insbesondere der Vorsprung 38 hin zur Klemmfläche 31 verlagert. Dadurch wird eine Klemmkraft in Richtung der Klemmfläche 31, wie in der Figur 4 mit dem Pfeil K angedeutet, erzeugt.

In der Figur 5 ist die Klemmeinheit 4 in einer Klemmstellung gezeigt. Die Stellschraube 8 ist fest angezogen und der Klemmabschnitt 25 drückt sich mit seinen Schneiden 39 an den beiden zahnartig ausgebildeten Vorsprungsabschnitten 38.1, 38.2 in die Innenseite des zwischen dem Klemmabschnitt 25 und der Klemmfläche 31 angeordneten Profilwandbereichs 42 des Hohlprofils 2.

In der Figur 11 ist eine Anschlussvorrichtung 50 zum Befestigen an dem Hohlprofil 2 gemäß einer zweiten Ausführungsform dargestellt, die derjenigen aus den Figuren 1 bis 10 weitestgehend entspricht, sodass hinsichtlich der Gemeinsamkeiten auf die obige Beschreibung Bezug genommen wird. Dabei sind gleiche beziehungsweise abgewandelte Einzelheiten mit den gleichen Bezugszeichen versehen, wie in den Figuren 1 bis 10. Der Unterschied besteht darin, dass die Anschlussvorrichtung 50 statt eines Wandhalters 5 einen Glashalter 55 umfasst.

Der Glashalter 55 ist analog zum Wandhalter 5 mit dem Anschlussabschnitt 9 des Grundkörpers 3 verschraubt, wobei auch die Verbindungsschraube 6 zum Verbinden des Anschlussabschnitts 9 mit dem Glashalter 55 vorzugsweise einen gleichen Schraubenkopfantrieb mit gleicher Antriebsgröße wie die Stellschraube 8 aufweist. Zweckmäßigerweise kann es sich bei beiden Schrauben 6 und 8 um identische Schrauben handeln.

Der Glashalter 55 weist einen Halteschlitz 56 auf, in dem ein Flächenelement, wie eine Glasscheibe eingesetzt werden kann. Das zu haltende Flächenelement kann mittels einer Schraube 57, die eine Madenschraube sein kann, und in eine Gewindebohrung 58 des Glashalters 55 eingeschraubt ist, gesichert werden. Vorzugsweise weist die Schraube 57 einen gleichen Schraubenkopfantrieb mit gleicher Antriebsgröße wie die Stellschraube 8 und/oder die Verbindungsschraube 6 auf.

In der Figur 12 ist eine Stabilisierungsanordnung 60 zum Halten eines Flächenelements 61, insbesondere einer Glaswand einer Dusche, gemäß einer Ausführungsform dargestellt. Die Stabilisierungsanordnung 60 umfasst das Hohlprofil 2, die Anschlussvorrichtung 1, wie in den Figuren 1 bis 10 gezeigt, und die Anschlussvorrichtung 50, wie in der Figur 11 gezeigt. Insofern wird hinsichtlich der Gemeinsamkeiten auf die obige Beschreibung Bezug genommen. Dabei sind gleiche beziehungsweise abgewandelte Einzelheiten mit den gleichen Bezugszeichen versehen, wie in den Figuren 1 bis 11.

Der Wandhalter 5 kann an einer ortsfesten Gebäudewand 62 festgeschraubt sein. Das wandnahe Ende des, hier beispielhaft als Vierkantrohr dargestellten, Hohlprofils 2 ist in dem Hülsenabschnitt 11 der Anschlussvorrichtung 1 festgelegt. Das wandferne Ende des Hohlprofils 2 ist in dem Hülsenabschnitt 11 der Anschlussvorrichtung 50 festgelegt. In dem Halteschlitz 56 des Glashalters 55 ist das Flächenelement 61 eingesetzt und mittels der Schraube 57 gesichert. In der Figur 11 ist der Einfachheit halber nur ein Teilausschnitt des Flächenelements 61 gezeigt. Das Flächenelement 61 kann beispielsweise eine Glaswand für eine Dusche sein, die am oberen Ende im Glashalter 55 gehalten ist und am unteren Ende gegen einen Gebäudeboden abgestützt sein kann. Zur Stabilisierung des Flächenelements 61, respektive zu dessen Abstützung gegen die Gebäudewand 62 können auch mehrere, insbesondere zwei der Stabilisierungsanordnungen 60 vorgesehen sein.

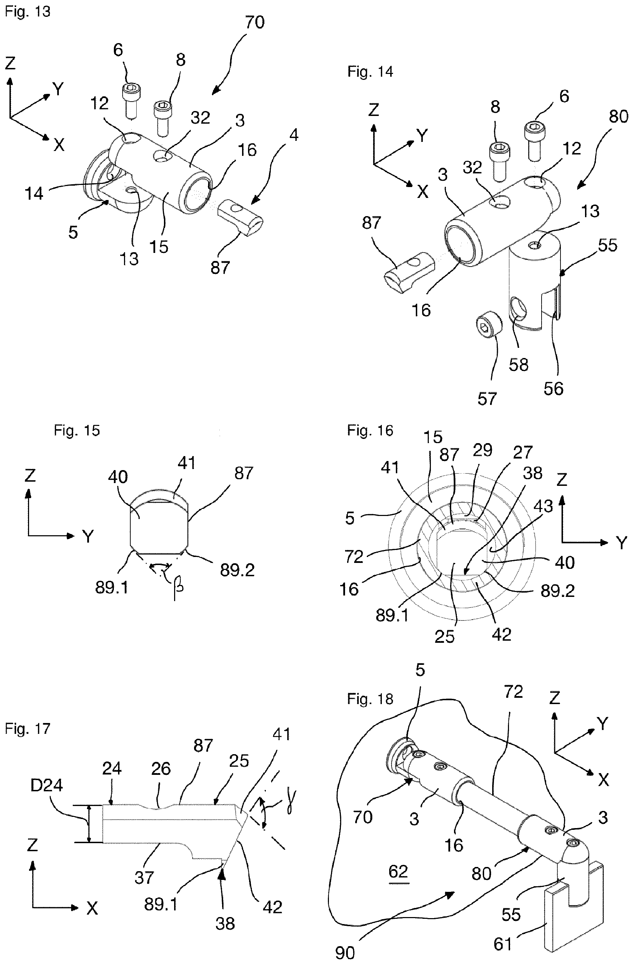

In der Figur 13 ist eine Anschlussvorrichtung 70 zum Befestigen an einem Hohlprofil 72 gemäß einer dritten Ausführungsform und in der Figur 14 ist eine Anschlussvorrichtung 80 zum Befestigen an einem Hohlprofil 72 gemäß einer vierten Ausführungsform dargestellt. Der Unterschied zu der Anschlussvorrichtung 1 beziehungsweise der Anschlussvorrichtung 50 besteht lediglich darin, dass die Anschlussvorrichtung 70, 80 zum Befestigen eines hohlzylindrischen Hohlprofils 72 mit einer im Querschnitt kreisförmigen Außenkontur geeignet ist. Insofern wird hinsichtlich der Gemeinsamkeiten zwischen den Ausführungsformen auf die obige Beschreibung Bezug genommen. Dabei sind gleiche beziehungsweise abgewandelte Einzelheiten mit den gleichen Bezugszeichen versehen.

Zum Befestigen des hohlzylindrischen Hohlprofils 72 weist der Hülsenabschnitt 11 eine um die Längsachse X umlaufende Hülsenwand 15 auf, die, hier, im Querschnitt kreisringförmig ausgebildet ist. An einem ersten axialen Ende des Hülsenabschnitts 11 ist eine im Querschnitt kreisförmige Einführöffnung 16 ausgebildet.

Die Anschlussvorrichtung 70 umfasst einen Wandhalter 5, wie in der Figur 13 gezeigt, und die Anschlussvorrichtung 80 umfasst einen Glashalter 55, wie in der Figur 14 gezeigt.

In den Figuren 15 und 17 ist ein Klemmelement 87 gezeigt, das in der Anschlussvorrichtung 70 beziehungsweise der Anschlussvorrichtung 80 identisch ausgebildet ist. Das Klemmelement 87 entspricht weitestgehend dem Klemmelement 7, wie in den Figuren 7 bis 9 im Detail gezeigt, sodass hinsichtlich der Gemeinsamkeiten zwischen den Ausführungsformen auf die obige Beschreibung Bezug genommen. Dabei sind gleiche beziehungsweise abgewandelte Einzelheiten mit den gleichen Bezugszeichen versehen. Der einzige Unterschied besteht in der Ausgestaltung des Vorsprungs 38, der bei dem Klemmelement 87 für die Klemmung des hohlzylindrischen Hohlprofils 72 ausgestaltet ist.

Hierzu weist der Vorsprung 38 eine durchgehende Kante mit zwei Schneiden 89.1, 89.2 auf. Die Schneiden 89.1, 89.2 sind im Querschnitt zur Längsachse X an beiden Querenden des Vorsprungs ausgebildet und schließen gemeinsam einen Winkel β ein, der größer als 45 Grad und kleiner als 135 Grad sein kann und, hier, etwa 90 Grad beträgt. Beim Eindrehen der Stellschraube 8 wird der Klemmabschnitt 25, wie zuvor beschrieben, hin zur Klemmfläche 31 verlagert, wobei hier die beiden voneinander beabstandeten Schneiden 89.1, 89.2 an dem konkav geformten Profilwandbereich 42 des hohlzylindrischen Hohlprofils 72 anstoßen, wie in der Figur 16 gezeigt. Die Schnittansicht Die Schneiden 89.1, 89.2 drücken sich in die Innenseite des Profilwandbereichs 42. Der zwischen den beiden Schneiden 89.1, 89.2 liegende Teil des Vorsprungs 38 kommt nicht in Kontakt mit dem Profilwandbereich 42 des Hohlprofils 72.

In der Figur 18 ist eine Stabilisierungsanordnung 90 zum Halten des Flächenelements 61, insbesondere einer Glaswand einer Dusche, gemäß einer weiteren Ausführungsform dargestellt. Die Stabilisierungsanordnung 90 umfasst das Hohlprofil 72, die Anschlussvorrichtung 70, wie in der Figur 13 gezeigt, und die Anschlussvorrichtung 80, wie in der Figur 14 gezeigt. Der Unterschied zu der Stabilisierungsanordnung 60, wie in der Figur 12 gezeigt, besteht nur darin, dass die Stabilisierungsanordnung 90 zum Befestigen des hohlzylindrischen Hohlprofils 72 mit einer im Querschnitt kreisförmigen Außenkontur geeignet ist. Insofern wird hinsichtlich der Gemeinsamkeiten auf die obige Beschreibung Bezug genommen. Dabei sind gleiche beziehungsweise abgewandelte Einzelheiten mit den gleichen Bezugszeichen versehen.

### Bezugszeichenliste

- 1: Anschlussvorrichtung
- 2: Hohlprofil
- 3: Grundkörper
- 4: Klemmeinheit
- 5: Wandhalter
- 6: Verbindungsschraube
- 7: Klemmelement
- 8: Stellschraube
- 9: Anschlussabschnitt
- 10: Bodenabschnitt
- 11: Hülsenabschnitt
- 12: Verbindungsbohrung
- 13: Sacklochbohrung
- 14: Bohrung
- 15: Hülsenwand
- 16: Einführöffnung
- 17: Aufnahmeraum
- 18: Boden
- 19: Absatz
- 20: Absatzfläche
- 21: zurückgestellter Bereich
- 22: Wandbereich
- 23: Vertiefung
- 24: Stützabschnitt
- 25: Klemmabschnitt
- 26: Durchgangsbohrung
- 27: Schraubenschaft
- 28: Gewindebohrung
- 29: Schraubenkopf
- 30: Stützfläche
- 31: Klemmfläche
- 32: Bohrung
- 33: Gegenfläche
- 34: Flächensegment
- 35: Flächensegment
- 36: Kipplinie
- 37: Unterseite
- 38: Vorsprung
- 39: Schneide
- 40: Stirnfläche
- 41: Stirnfläche
- 42: Profilwandbereich
- 43: Hohlraum
- 50: Anschlussvorrichtung
- 55: Glashalter
- 56: Halteschlitz
- 57: Schraube
- 58: Gewindebohrung
- 60: Stabilisierungsanordnung
- 61: Flächenelement
- 62: Gebäudewand
- 70: Anschlussvorrichtung
- 72: Hohlprofil
- 80: Anschlussvorrichtung
- 87: Klemmelement
- 89: Schneide
- 90: Stabilisierungsanordnung

- α: Winkel
- β: Winkel
- γ: Winkel
- A: Schraubenachse
- D: Dicke
- E: Ebene
- K: Klemm kraft
- M: Kippbewegung
- S: Spalt
- X: Längsachse
- Y: Querachse
- Z: Hochachse

## Patentansprüche

1. Anschlussvorrichtung zum Befestigen an einem Hohlprofil (2; 72), wobei die Anschlussvorrichtung (1; 50; 70; 80) umfasst:
einen Grundkörper (3) mit einem Bodenabschnitt (10) und einem Hülsenabschnitt (11), der sich entlang einer Längsachse (X) erstreckt und an einem bodenfernen axialen Ende eine Einführöffnung (16) für das Hohlprofil aufweist, und eine Klemmeinheit (4), **dadurch gekennzeichnet,**
**dass** die Klemmeinheit (4) ein Klemmelement (7) und eine Stellschraube (8) aufweist, wobei ein Stützabschnitt (24) des Klemmelements (7) am Bodenabschnitt (10) des Grundkörpers (3) abgestützt ist und ein Klemmabschnitt (25) des Klemmelements (7) im Hülsenabschnitt (11) des Grundkörpers (3) angeordnet ist, und wobei die Stellschraube (8) einen Schraubenkopf (29) und einen sich entlang einer Schraubenachse (A) erstreckenden Schraubenschaft (27) aufweist, wobei der Schraubenschaft (27) mit dem Bodenabschnitt (10) des Grundkörpers (3) schraubverbunden und der Schraubenkopf (29) an einer am Stützabschnitt (24) des Klemmelements (7) ausgebildeten Stützfläche (30) abstützbar ist, sodass durch Eindrehen der Stellschraube (8) in den Bodenabschnitt (10) der Klemmabschnitt (25) zu einer Klemmfläche (31) verlagerbar ist.

2. Anschlussvorrichtung nach Anspruch 1, **dadurch gekennzeichnet, dass** der Bodenabschnitt (10) einen unter Bildung eines Absatzes (19) gestuft gestalteten Boden (18) aufweist, wobei in dem Absatz (19) eine Gewindebohrung (28) für den Schraubenschaft (27) der Stellschraube (8) ausgebildet ist.

3. Anschlussvorrichtung nach Anspruch 2, **dadurch gekennzeichnet, dass** der Stützabschnitt (24) in eine zwischen dem Absatz (19) und einem den Absatz (19) entlang der Längsachse (X) überlappenden Wandbereich (22) gebildete Vertiefung (23) im Boden (18) eingreift und mit der Stellschraube (8) gegen eine dem Stützabschnitt (24) zugewandte Gegenfläche (33) des Absatzes (19) verspannbar beziehungsweise verspannt ist.

4. Anschlussvorrichtung nach Anspruch 3, **dadurch gekennzeichnet, dass** die Gegenfläche (33) des Absatzes (19) ein erstes Flächensegment (34), das parallel zur Längsachse (X) ausgerichtet ist, und ein zweites Flächensegment (35), das schräg zur Längsachse (X) ausgerichtet ist und mit der Längsachse (X) einen sich zur Einführöffnung (16) hin öffnenden Winkel (α) einschließt, aufweist, wobei eine zwischen dem ersten Flächensegment (34) und dem zweiten Flächensegment (35) gebildete Kante (36) bodenwärts von der Schraubachse (A) angeordnet ist.

5. Anschlussvorrichtung nach einem der Ansprüche 1 bis 4, **dadurch gekennzeichnet, dass** der Klemmabschnitt (25) an einer der Klemmfläche (31) zugewandten Unterseite (37) des Klemmelements (7) einen Vorsprung (38) aufweist, wobei insbesondere der Vorsprung (38) an einem freien axialen Ende des Klemmabschnitts (25) angeordnet ist.

6. Anschlussvorrichtung nach Anspruch 5, **dadurch gekennzeichnet, dass** der Vorsprung (38) zumindest eine Schneide (38.1, 38.2; 89.1, 89.2) aufweist.

7. Anschlussvorrichtung nach Anspruch 6, **dadurch gekennzeichnet, dass** der Vorsprung (38) zwei der zumindest einen Schneide (89.1, 89.2) aufweist, die im Querschnitt zur Längsachse (X) an beiden Querenden des Vorsprungs (38) ausgebildet sind und gemeinsam einen Winkel (β) einschließen, der größer als 45 Grad und kleiner als 135 Grad ist.

8. Anschlussvorrichtung nach Anspruch 7, **dadurch gekennzeichnet, dass** der Hülsenabschnitt (11) im Querschnitt zur Längsachse (X) eine kreisförmige Innenkontur aufweist.

9. Anschlussvorrichtung nach Anspruch 6, **dadurch gekennzeichnet, dass** der Vorsprung (38) zumindest zwei voneinander beabstandete Vorsprungsabschnitte mit je einer von der zumindest einen Schneide (38.1, 38.2) aufweist, wobei insbesondere die Schneiden (38.1, 38.2) auf einer gedachten Gerade liegen.

10. Anschlussvorrichtung nach Anspruch 9, **dadurch gekennzeichnet, dass** der Hülsenabschnitt (11) im Querschnitt zur Längsachse (X) eine rechteckige Innenkontur aufweist.

11. Anschlussvorrichtung nach einem der Ansprüche 1 bis 10, **dadurch gekennzeichnet, dass** der Hülsenabschnitt (11) eine um die Längsachse (X) umlaufende Hülsenwand (15) aufweist, wobei die Klemmfläche (31) innenseitig an der Hülsenwand (15) ausgebildet ist.

12. Stabilisierungsset mit einem Hohlprofil (2; 72) und zumindest einer Anschlussvorrichtung zum Befestigen an dem Hohlprofil (2; 72), wobei die zumindest eine Anschlussvorrichtung (1; 50; 70; 80) nach einem der Ansprüche 1 bis 11 gestaltet ist.

13. Stabilisierungsset nach Anspruch 12, **dadurch gekennzeichnet, dass** der Klemmabschnitt (25) in einem vom Hohlprofil (2; 72) umschlossenen Hohlraum (43) angeordnet beziehungsweise anordbar ist, wobei ein Profilwandbereich (42) des Hohlprofils (2; 72) zwischen dem Klemmabschnitt (25) und der Klemmfläche (31) einspannbar beziehungsweise eingespannt ist.

14. Stabilisierungsset nach Anspruch 13, **dadurch gekennzeichnet, dass** der Vorsprung (38) des Klemmelements (7) innenseitig in den Profilwandbereich (42) des Hohlprofils (2; 72) eindrückbar beziehungsweise eingedrückt ist.

15. Stabilisierungsanordnung zum Abstützen eines Flächenelements (61), insbesondere einer Glaswand einer Dusche gegenüber einem ortsfesten Bauteil (62), insbesondere einer Gebäudewand, wobei die Stabilisierungsanordnung das Flächenelement (61) und ein Stabilisierungsset nach einem der Ansprüche 12 bis 14 umfasst.

## Claims

1. Connecting device for attaching a hollow profile (2; 72), the connecting device comprising (1; 50; 70; 80):
a base member (3) with a base portion (10) and a sleeve portion (11) extending along a longitudinal axis (X) and comprising an insertion opening (16) for the hollow profile at an axial end remote from the base, and a clamping unit (4), **characterised in**
**that** the clamping unit (4) has a clamping element (7) and an set screw (8), wherein a support section (24) of the clamping element (7) is supported on the base portion (10) of the base member (3), and a clamping section (25) of the clamping element (7) is arranged in the sleeve portion (11) of the base member (3), and wherein the set screw (8) comprises a screw head (29) and a screw shank (27) extending along a screw axis (A), wherein the screw shank (27) is screw-connected to the base portion (10) of the base member (3) and the screw head (29) is supportable on a support face (30) formed on the support section (24) of the clamping element (7), so that by screwing the set screw (8) into the base portion (10) the clamping section (25) is displacable towards a clamping face (31).

2. Connecting device according to claim 1, **characterised in that** the base portion (10) comprises a stepped base (18) forming a shoulder (19), wherein a threaded bore (28) for the screw shank (27) of the set screw (8) is provided in the shoulder (19).

3. Connection device according to claim 2, **characterised in that** the support section (24) engages a recess (23) formed in the base (18) between the shoulder (19) and a wall region (22) overlapping the shoulder (19) along the longitudinal axis (X) and is clampable, respectively clamped by the set screw (8) against a mating face (33) of the shoulder (19) facing the support section (24).

4. Connecting device according to claim 3, **characterised in that** the mating face (33) of the shoulder (19) comprises a first face segment (34) oriented parallel to the longitudinal axis (X) and a second face segment (35), oriented obliquely to the longitudinal axis (X) and forming an angle (α) with the longitudinal axis (X) opening towards the insertion opening (16), with an edge (36) formed between the first face segment (34) and the second face segment (35) being arranged base-sided from the screw axis (A).

5. Connection device according to one of claims 1 to 4, **characterised in that** the clamping section (25) has a projection (38) on an underside (37) of the clamping element (7) facing the clamping face (31), wherein in particular the projection (38) is arranged at a free axial end of the clamping section (25).

6. Connection device according to claim 5, **characterised in that** the projection (38) has at least one cutting edge (38.1, 38.2; 89.1, 89.2).

7. Connection device according to claim 6, **characterised in that** the projection (38) comprises two of the at least one cutting edge (89.1, 89.2) which, in a cross-section to the longitudinal axis (X), are formed at both transverse ends of the projection (38) and together form an angle (β) greater than 45 degrees and less than 135 degrees.

8. Connection device according to claim 7, **characterised in that** the sleeve portion (11) has a circular inner contour in cross-section to the longitudinal axis (X).

9. Connection device according to claim 6, **characterised in that** the projection (38) comprises at least two projection portions spaced from each other, each with one of the at least one cutting edge (38.1, 38.2), wherein in particular the cutting edges (38.1, 38.2) lie on an imaginary straight line.

10. Connection device according to claim 9, **characterised in that** the sleeve portion (11) has a rectangular inner contour in cross-section to the longitudinal axis (X).

11. Connecting device according to any one of claims 1 to 10, **characterised in that** the sleeve portion (11) comprises a sleeve wall (15) extending around the longitudinal axis (X), wherein the clamping face (31) is formed on the inside of the sleeve wall (15).

12. Stabilising set comprising a hollow profile (2; 72) and at least one connecting device for attaching the hollow profile (2; 72), wherein the at least one connecting device (1; 50; 70; 80) is configured according to any one of claims 1 to 11.

13. Stabilising set according to claim 12, **characterised in that** the clamping section (25) is arranged, respectively arrangable in a cavity (43) surrounded by the hollow profile (2; 72), wherein a profile wall region (42) of the hollow profile (2; 72) is clampable, respectively clamped between the clamping section (25) and the clamping face (31).

14. Stabilising set according to claim 13, **characterised in that** the projection (38) of the clamping element (7) is pressable, respectively pressed inside into the profile wall region (42) of the hollow profile (2; 72).

15. Stabilising arrangement for supporting a flat element (61), in particular a glass wall of a shower, against a stationary structural member (62), in particular a building wall, wherein the stabilising arrangement comprises the flat element (61) and a stabilising set according to any one of claims 12 to 14.

## Revendications

1. Dispositif de raccordement destiné à être fixé à un profilé creux (2 ; 72), dans lequel le dispositif de raccordement (1 ; 50 ; 70 ; 80) comporte :
- un corps de base (3) avec une section de fond (10) et une section de douille (11), laquelle s'étend le long d'un axe longitudinal (X) et présente une ouverture d'insertion (16) pour le profilé creux à une extrémité axiale éloignée du fond, ainsi qu'une unité de serrage (4), **caractérisé en ce que**
l'unité de serrage (4) présente un élément de serrage (7) et une vis de réglage (8), dans lequel une section d'appui (24) de l'élément de serrage (7) s'appuie sur la section de fond (10) du corps de base (3) et une section de serrage (25) de l'élément de serrage (7) est disposée dans la section de douille (11) du corps de base (3), et dans lequel la vis de réglage (8) présente une tête de vis (29) et une tige de vis (27) s'étendant le long d'un axe de vis (A), dans lequel la tige de vis (27) est reliée par vissage à la section de fond (10) du corps de base (3) et la tête de vis (29) peut s'appuyer sur une surface d'appui (30) formée sur la section d'appui (24) de l'élément de serrage (7), de sorte que la section de serrage (25) peut être déplacée vers une surface de serrage (31) par l'introduction de la vis de réglage (8) dans la section de fond (10).

2. Dispositif de raccordement selon la revendication 1, **caractérisé en ce que** la section de fond (10) présente un fond (18) conçu de manière étagée par formation d'un gradin (19), dans lequel un alésage fileté (28) pour la tige de vis (27) de la vis de réglage (8) est formé dans le gradin (19).

3. Dispositif de raccordement selon la revendication 2, **caractérisé en ce que** la section d'appui (24) s'engage dans une cavité (23) dans le fond (18), laquelle est formée entre le gradin (19) et une région de paroi (22) chevauchant le gradin (19) le long de l'axe longitudinal (X), et peut être serrée ou est serrée avec la vis de réglage (8) contre une contre-surface (33) tournée vers la section d'appui (24).

4. Dispositif de raccordement selon la revendication 3, **caractérisé en ce que** la contre-surface (33) du gradin (19) présente un premier segment de surface (34) orienté parallèlement à l'axe longitudinal (X) et un deuxième segment de surface (35) orienté obliquement à l'axe longitudinal (X) et inclut un angle (α) s'ouvrant vers l'ouverture d'insertion (16) avec l'axe longitudinal (X), dans lequel une arête (36) formée entre le premier segment de surface (34) et le deuxième segment de surface (35) est disposée vers le fond par rapport à l'axe de vis (A).

5. Dispositif de raccordement selon l'une des revendications 1 à 4, **caractérisé en ce que** la section de serrage (25) présente une saillie (38) sur un côté inférieur (37) de l'élément de serrage (7) tourné vers la surface de serrage (31), dans lequel la saillie (38) est en particulier disposée à une extrémité axiale libre de la section de serrage (25).

6. Dispositif de raccordement selon la revendication 5, **caractérisé en ce que** la saillie (38) présente au moins un tranchant (38.1, 38.2 ; 89.1, 89.2).

7. Dispositif de raccordement selon la revendication 6, **caractérisé en ce que** la saillie (38) présente deux des au moins un tranchants (89.1, 89.2), lesquels sont formés aux deux extrémités transversales de la saillie (38) dans la section transversale à l'axe longitudinal (X) et forment ensemble un angle (β) supérieur à 45 degrés et inférieur à 135 degrés.

8. Dispositif de raccordement selon la revendication 7, **caractérisé en ce que** la section de douille (11) présente un contour intérieur circulaire dans la section transversale à l'axe longitudinal (X).

9. Dispositif de raccordement selon la revendication 6, **caractérisé en ce que** la saillie (38) présente au moins deux sections de saillie espacées l'une de l'autre, lesquelles présentent respectivement l'un des au moins un tranchants (38.1, 38.2), dans lequel les tranchants (38.1, 38.2) se trouvent en particulier sur une ligne imaginaire.

10. Dispositif de raccordement selon la revendication 9, **caractérisé en ce que** la section de douille (11) présente un contour intérieur rectangulaire dans la section transversale à l'axe longitudinal (X).

11. Dispositif de raccordement selon l'une des revendications 1 à 10, **caractérisé en ce que** la section de douille (11) présente une paroi de douille (15) s'étendant autour de l'axe longitudinal (X), dans lequel la surface de serrage (31) est formée du côté intérieur sur la paroi de douille (15).

12. Ensemble de stabilisation comprenant un profilé creux (2 ; 72) et au moins un dispositif de raccordement destiné à être fixé au profilé creux (2 ; 72), dans lequel l'au moins un dispositif de raccordement (1 ; 50 ; 70 ; 80) est conçu selon l'une des revendications 1 à 11.

13. Ensemble de stabilisation selon la revendication 12, **caractérisé en ce que** la section de serrage (25) est disposée ou peut être disposée dans un espace creux (43) entouré par le profilé creux (2 ; 72), dans lequel une région de paroi de profilé (42) du profilé creux (2 ; 72) peut être serrée ou est serrée entre la section de serrage (25) et la surface de serrage (31).

14. Ensemble de stabilisation selon la revendication 13, **caractérisé en ce que** la saillie (38) de l'élément de serrage (7) peut être enfoncée ou est enfoncée dans la région de paroi de profilé (42) du profilé creux (2 ; 72) .

15. Dispositif de stabilisation destiné à l'appui d'un élément de surface (61), en particulier d'une paroi en verre d'une douche par rapport à un composant fixe (62), en particulier un mur de bâtiment, dans lequel le dispositif de stabilisation comporte l'élément de surface (61) et un ensemble de stabilisation selon l'une des revendications 12 à 14.
